# EUROPÄISCHE PATENTANMELDUNG

(11) **EP 3 594 615 A1**
(43) Veröffentlichungstag der Anmeldung: **15.01.2020**
(21) Anmeldenummer: 19000319.4
(22) Anmeldetag: 04.07.2019
(51) Int. Cl.: G01B 11/00, G01B 11/245, G01B 11/25

(54) **OPTISCHES SENSORSYSTEM FÜR EIN KOORDINATENMESSGERÄT, VERFAHREN ZUM ERFASSEN EINES MESSPUNKTS AUF EINER OBERFLÄCHE EINES MESSOBJEKTS SOWIE KOORDINATENMESSGERÄT**

(30) Priorität: 12.07.2018 DE 102018005506
(71) Anmelder: Wenzel Group GmbH & Co. KG, 97859 Wiesthal (DE)
(72) Erfinder: HOFBECK, Thomas, 92342 Freystadt (DE)
(74) Vertreter: Fugmann, Winfried

(57) **Zusammenfassung**

Ein erfindungsgemäßes optisches Sensorsystem (8, 8') für ein Koordinatenmessgerät (1) umfasst eine Beleuchtungsanordnung (10) zum Projizieren einer Beleuchtungsstrahlung auf einen Oberflächenbereich eines Messobjekts und eine Detektoranordnung (12, 12', 12") mit einer Detektoroptik und einer Sensoranordnung zum Erzeugen eines Sensorsignals aufgrund eines Teils der vom Oberflächenbereich des Messobjekts reflektierten Beleuchtungsstrahlung, wobei die Beleuchtungsanordnung (10) und die Detektoranordnung (12, 12', 12") zum Erfassen eines Abstands des Oberflächenbereichs des Messobjekts vom Sensorsystem (8, 8') zusammenwirken, wobei die Sensoranordnung mindestens einen ersten und einen zweiten Sensor umfasst und die Detektoroptik zum Weiterleiten eines ersten Anteils der reflektierten Beleuchtungsstrahlung auf den ersten Sensor und eines zweiten Anteils der reflektierten Beleuchtungsstrahlung auf den zweiten Sensor ausgebildet ist und wobei ein Sensorsignal des ersten Sensors eine unterschiedliche Signalstärke wie ein entsprechendes Sensorsignal des zweiten Sensors hat. Die Erfindung betrifft auch ein Verfahren zum Erfassen eines Messpunkts auf einer Oberfläche eines Messobjekts mit einem Koordinatenmessgerät (1) sowie ein Koordinatenmessgerät (1).

## Beschreibung

Die vorliegende Erfindung betrifft ein optisches Sensorsystem für ein Koordinatenmessgerät, ein Verfahren zum Erfassen eines Messpunkts auf einer Oberfläche eines Messobjekts mit einem Koordinatenmessgerät sowie ein Koordinatenmessgerät.

Koordinatenmessgeräte werden zur Aufnahme der Raumkoordinaten von Messpunkten auf der Oberfläche von Messobjekten eingesetzt. Hierfür weist ein Koordinatenmessgerät (KMG) eine Grundstruktur zur Aufnahme eines Messobjekts bzw. Werkstücks auf sowie eine Mehrzahl von antreibbaren Achsen, wodurch ein Tastkopf des Koordinatenmessgeräts innerhalb eines Messvolumens in beliebige Positionen relativ zum Messobjekt gebracht werden kann. Der Tastkopf dient zum Erfassen von Messpunkten auf der Oberfläche des Messobjekts, beispielsweise durch berührende Antastung mit einem mechanischen Taster oder auch durch berührungslose Detektion der Messobjektoberfläche mit einem optischen Sensor. Die Achsen des Koordinatenmessgeräts weisen üblicherweise Maßstäbe und Positionsgeber sowie elektromotorische Antriebe auf. Das Koordinatenmessgerät kann auch eine oder mehrere Drehachsen aufweisen, um das Messobjekt relativ zum Taster bzw. Sensor durch eine rotatorische Bewegung auszurichten.

Für eine Vielzahl von Messaufgaben haben sich optische Sensoren als vorteilhaft erwiesen. Dabei wird bei vielen Messverfahren eine punktförmige oder linienförmige Lichtverteilung oder auch ein Muster, das etwa aus einer Mehrzahl paralleler Linien bestehen kann, auf eine Oberfläche des Messobjekts projiziert und das reflektierte Licht mit einer Detektoranordnung erfasst. Hierbei ist die Beleuchtungsrichtung in einem Winkel zur Blickrichtung des Detektorsystems angeordnet, so dass aus einer quer zur Blickrichtung erfolgenden Verschiebung der detektierten Lichtverteilung auf einen Abstand der Oberfläche vom Sensor geschlossen werden kann. Derartige Messverfahren werden auch als Triangulationsverfahren bezeichnet. Da die Antastung dabei berührungslos erfolgt, ist auch eine Vermessung nachgiebiger Oberflächen bzw. Messobjekte möglich. Ferner kann es möglich sein, je nach Art der projizierten Lichtverteilung eine Vielzahl von Oberflächenpunkten gleichzeitig zu erfassen. Besonders vorteilhaft ist eine optische Antastung beim Scannen, wobei das Sensorsystem zum Aufnehmen von Messpunkten entlang einer Scanlinie bewegt wird und dabei kontinuierlich oder in einem kurzen Zeittakt Messwerte aufgenommen werden. Aus den jeweils ermittelten Abstandswerten, zusammen mit den jeweiligen Positionen der Achsen des Koordinatenmessgeräts und ggf. der ebenfalls bekannten räumlichen Orientierung des optischen Sensorsystems, können die Raumkoordinaten des jeweiligen Punkts auf der Oberfläche des Messobjekts ermittelt werden.

Die Oberfläche des Messobjekts kann sehr unterschiedliche Absorptions-, Streu- und Reflexionseigenschaften aufweisen. So wird etwa bei stark absorbierenden oder teiltransparenten Oberflächen nur ein geringer Teil des projizierten Beleuchtungslichts in Richtung des Detektors zurückgeworfen. Das gleiche gilt bei glänzenden Oberflächen, wenn deren Ausrichtung derart ist, dass das projizierte Beleuchtungslicht in eine andere Richtung als zum Detektor reflektiert wird. In diesen Fällen liefert der Sensor daher nur ein sehr schwaches Signal. Andererseits kann im Falle von stark reflektierenden oder glänzenden Oberflächen mit einer entsprechenden Ausrichtung ein sehr großer Anteil des Beleuchtungslichts zum Detektor gelangen und dadurch den Sensor um ein Mehrfaches der Sättigungsgrenze überbelichten. In beiden Fällen ist eine Abstandsermittlung und damit die Erfassung der Raumkoordinaten des betreffenden Oberflächenpunkts nur in unzureichendem Maße oder gar nicht möglich.

Aus WO 2007/125081 A1 ist es bekannt, beim Scannen die Oberfläche eines Objekts mit einer Lichtlinie zu beleuchten und das von der Objektoberfläche reflektierte Licht mit einer Kamera, die einen Bildsensor umfasst, zu detektieren. Während der Aufnahme eines Bilds wird, in Abhängigkeit von den Intensitäten, die von der Kamera detektiert werden, die Intensität der Lichtlinie angepasst.

In WO 2010/048960 A1 wird ein Scanner zum Erfassen der dreidimensionalen Geometrie eines Teils der Oberfläche eines Objekts vorgeschlagen, wobei der Scanner eine Laserlichtquelle mit anpassbarer Leistung, Projektionsmittel zum Richten des Lichts der Laserlichtquelle auf die Oberfläche des Objekts, einen Bildsensor und weitere Detektormittel zum Erfassen mindestens eines Teils des von der Oberfläche reflektierten Lichts umfasst. Weiter sind Regelungsmittel vorgesehen, um die Intensität der Lichtquelle aufgrund der von der Oberfläche reflektierten Lichtmenge anzupassen.

Gemäß EP 3 165 874 A1 wird ein Messlichtstrahl erzeugt, der Messlichtstrahl auf ein Messobjekt gerichtet, eine Reflexion des Messlichts von dem Objekt mit entsprechenden Pixeln eines Bildsensors in einer definierten Detektionssequenz detektiert und eine Abstandsinformation aufgrund der detektierten Reflexion abgeleitet. Die Detektionssequenz umfasst mindestens zwei Belichtungs-Subsequenzen, von denen jede eine bestimmte Belichtungsdauer und eine Sättigungsgrenze für die Pixel des Sensors definiert, wobei die Belichtungsdauern und Sättigungsgrenzen so definiert sind, dass die finale Gesamtladung für jedes Pixel unterhalb der Sättigungsgrenze der letzten Belichtungs-Subsequenz ist.

In DE 10 2013 211 286 A1 ist ein Verfahren zum Vermessen eines Messobjekts mit Hilfe des CCD- oder CMOS-Sensors eines Koordinatenmessgeräts offenbart, wobei von dem Messobjekt mehrere Bilder in unveränderter Lage mit dem CCD- oder CMOS-Sensor aufgenommen werden, die Aufnahmebedingungen für mindestens zwei Bilder verändert werden und die Daten dieser mindestens zwei aufgenommenen Bilder zumindest teilweise dazu verwendet werden, einen neuen Datensatz für eine Aufnahme des aufgenommenen Messobjekts zu erzeugen. Der neue Datensatz kann ein HDR-Datensatz sein.

Aus US 2012/0229606 A1 ist eine Vorrichtung und ein Verfahren zur Erfassung von dreidimensionalen Daten einer Objektoberfläche bekannt, wobei zwei oder mehr zweidimensionale Bilder entlang einer ersten optischen Achse auf die Objektoberfläche projiziert werden, die jeweils ein Muster mit ungleichförmiger Helligkeit bilden. Die entsprechenden reflektierten Bilder werden entlang einer zweiten optischen Achse aufgenommen. Durch Vergleich mit Kalibrierungsdaten, die an einer Referenzoberfläche in unterschiedlichen Positionen entlang einer z-Achse aufgenommen worden sind, werden hieraus die dreidimensionalen Daten der Objektoberfläche ermittelt. Die Lichtquellen der Projektionseinheit können ansteuerbar sein, um die Intensität des erzeugten Lichts in einem jeweiligen Wellenlängenbereich zu verändern, wenn die Reflektion der Objektoberfläche in dem betreffenden Wellenlängenbereich nicht optimal ist.

Es hat sich jedoch gezeigt, dass die bekannten Lösungen insbesondere hinsichtlich der Messgeschwindigkeit nicht optimal sind. So ist bei denjenigen Lösungen, bei denen die Beleuchtung aufgrund des detektierten Lichts angepasst wird, keine Regelung in Echtzeit möglich, da die jeweils eingestellte Leistung des Beleuchtungslichts einem früheren Messpunkt zugehört. Daher ist ein erheblicher Aufwand für eine schnelle Regelung und Synchronisation notwendig, oder es kann nur eine relativ geringe Scangeschwindigkeit erreicht werden. Bei solchen Verfahren, bei denen Mehrfachbelichtungen erforderlich sind, entsteht insbesondere beim Scannen das Problem, dass die mehreren aufgenommenen Bilder unterschiedliche Oberflächenbereiche abbilden. Dies bewirkt ebenfalls einen Verlust an Messgenauigkeit und/oder Messgeschwindigkeit.

Es ist Aufgabe der vorliegenden Erfindung, ein optisches Sensorsystem für ein Koordinatenmessgerät, ein Verfahren zum Erfassen eines Messpunkts auf einer Oberfläche eines Messobjekts mit einem Koordinatenmessgerät sowie ein Koordinatenmessgerät anzugeben, wobei die genannten Nachteile möglichst vermieden werden.

Diese Aufgabe wird durch eine Vorrichtung, ein Verfahren und ein Koordinatenmessgerät wie in den unabhängigen Ansprüchen angegeben gelöst.

Vorteilhafte Weiterbildungen der Erfindung ergeben sich aus den Unteransprüchen.

Ein erfindungsgemäßes optisches Sensorsystem ist für den Einsatz an einem Koordinatenmessgerät zum Erfassen von Messpunkten auf einer Oberfläche eines Messobjekts ausgebildet. Insbesondere kann das optische Sensorsystem ein Tastkopf sein, der am Ende eines Messarms des Koordinatenmessgeräts angeordnet ist und durch Bewegung der Achsen des Koordinatenmessgeräts innerhalb eines Messvolumens positioniert werden kann. Das optische Sensorsystem kann aber auch als Teil eines Tastkopfs ausgebildet sein, beispielsweise kann das optische Sensorsystem als optischer Taster alternativ oder zusätzlich zu einem berührenden Taster in den Tastkopf einwechselbar sein.

Das optische Sensorsystem umfasst eine Beleuchtungsanordnung, die zum Projizieren einer Lichtverteilung auf einen Oberflächenbereich eines zu vermessenden Messobjekts ausgebildet ist. Die Beleuchtungsanordnung umfasst insbesondere eine Lichtquelle und eine Beleuchtungsoptik, mit der eine Beleuchtungsstrahlung auf die Oberfläche des Messobjekts gerichtet wird. Die Beleuchtungsanordnung kann beispielsweise zum Erzeugen eines Lichtpunkts, einer Lichtlinie oder auch einer andersartig strukturierten Beleuchtung bzw. eines Musters ausgebildet sein. Mit den Ausdrücken "Strahlung" und "Licht" wird hier elektromagnetische Strahlung im sichtbaren Bereich ebenso wie in angrenzenden Wellenlängenbereichen bezeichnet. Die projizierte Beleuchtungsstrahlung kann breitbandig (Weißlicht) oder auch auf einen oder mehrere schmale Wellenlängenbereiche beschränkt sein.

Weiter umfasst das optische Sensorsystem eine Detektoranordnung, die eine Detektoroptik und eine Sensoranordnung umfasst. Die Sensoranordnung ist zum Erzeugen eines Sensorsignals aufgrund eines Anteils der von einem beleuchteten Oberflächenbereich des Messobjekts reflektierten und von der Detektoranordnung aufgenommenen Teils der Beleuchtungsstrahlung ausgebildet. Hierfür weist die Detektoroptik beispielsweise Linsen und/oder andere optische Elemente auf, um zumindest einen Anteil der von der Detektoranordnung aufgenommenen reflektierten Beleuchtungsstrahlung zur Sensoranordnung weiterzuleiten. Die Sensoranordnung umfasst elektronische Sensormittel, die aufgrund des weitergeleiteten Anteils der reflektierten Beleuchtungsstrahlung das Sensorsignal erzeugen. Der Begriff "Sensorsignal" kann dabei auch eine Mehrzahl von Signalen umfassen, beispielsweise die Signale bzw. Pixelwerte mehrerer Pixel eines Bildsensors. Wenn im Folgenden der Einfachheit halber von "reflektierter" Beleuchtungsstrahlung die Rede ist, so sollen damit auch andere physikalische Vorgänge umfasst sein, durch die ein Teil der eingestrahlten Beleuchtungsstrahlung vom Messobjekt zur Detektoranordnung zurückgesandt wird, wie beispielsweise Streuung.

Die Beleuchtungsanordnung und die Detektoranordnung sind derart ausgebildet und angeordnet, dass sie zum Erfassen eines Abstands des von der Beleuchtungsanordnung beleuchteten Oberflächenbereichs des Messobjekts zum Sensorsystem zusammenwirken. Insbesondere können die Beleuchtungs- und die Detektoranordnung nach dem Triangulationsprinzip angeordnet sein, wobei eine Beleuchtungsrichtung der Beleuchtungsanordnung und eine Blickrichtung der Detektoranordnung in einem Winkel zueinander stehen und sich in einem Messbereich schneiden. Aus einer quer zur Blickrichtung der Detektoranordnung erfolgenden Verschiebung der projizierten Lichtverteilung, beispielsweise des Lichtpunkts, der Lichtlinie oder des Musters, lässt sich auf den Abstand des Oberflächenbereichs von der Detektoranordnung schließen. Aufgrund des Signals der Sensoranordnung kann somit der Abstand des betreffenden Oberflächenbereichs des Messobjekts bzw. eines im Oberflächenbereich befindlichen Messpunkts ermittelt werden.

Erfindungsgemäß umfasst die Sensoranordnung mindestens einen ersten und einen zweiten Sensor, und die Detektoroptik ist zum Weiterleiten eines ersten Anteils der aufgenommenen reflektierten Beleuchtungsstrahlung auf den ersten Sensor und eines zweiten Anteils der aufgenommenen reflektierten Beleuchtungsstrahlung auf den zweiten Sensor ausgebildet, insbesondere zum gleichzeitigen Weiterleiten des ersten und des zweiten Anteils auf den ersten bzw. den zweiten Sensor. Dabei ist die Detektoroptik und/oder die Detektoranordnung und/oder die Beleuchtungsanordnung derart ausgebildet, dass ein aufgrund des weitergeleiteten ersten Anteils der reflektierten Beleuchtungsstrahlung erzeugtes Sensorsignal des ersten Sensors eine unterschiedliche Signalstärke hat wie ein aufgrund des weitergeleiteten zweiten Anteils der reflektierten Beleuchtungsstrahlung vom zweiten Sensor erzeugtes Sensorsignal. Dabei kann das Verhältnis der Signalstärken vorgegeben sein und beispielsweise durch die Eigenschaften der Detektoroptik und/oder der Sensoren festgelegt sein. Dass die Sensorsignale unterschiedliche Signalstärken haben, bedeutet beispielsweise bei Sensoren mit einer Mehrzahl von Pixeln, dass einander entsprechende Pixel des ersten und des zweiten Sensors, die demselben Messpunkt auf der Oberfläche des Messobjekts entsprechen, unterschiedliche Ladungen bzw. Pixelwerte haben und einen Dynamikbereich des jeweiligen Sensors unterschiedlich weit ausnutzen; dies kann jeweils für ein einzelnes Pixel gelten oder auch etwa für die Summe, einen Mittelwert oder das Maximum oder Minimum der Ladungen bzw. Pixelwerte mehrerer Pixel eines jeweiligen Sensors, wenn der Messpunkt auf mehrere Pixel des Sensors abgebildet wird. Die Sensorsignale weisen insbesondere Signalstärken auf, die in Bezug zu einem jeweiligen Dynamikbereich des ersten bzw. des zweiten Sensors eine unterschiedliche Höhe haben bzw. in unterschiedlicher Weise in Bezug zum jeweiligen Dynamikbereich stehen. So kann etwa das Sensorsignal des ersten Sensors unterhalb oder oberhalb des Dynamikbereichs des ersten Sensors liegen und zugleich das entsprechende Sensorsignal des zweiten Sensors innerhalb des Dynamikbereichs des zweiten Sensors, oder umgekehrt. Unter "Dynamikbereich" wird hierbei insbesondere derjenige Bereich der Beleuchtungsstärke des jeweiligen Sensors verstanden, der ein für eine Abstandsermittlung des betreffenden Messpunkts geeignetes Sensorsignal erzeugt.

Der erste und der zweite Anteil der reflektierten Beleuchtungsstrahlung, die zum ersten bzw. zum zweiten Sensor weitergeleitet werden, kommen vom selben Oberflächenbereich des Messobjekts bzw. repräsentieren insbesondere denselben Messpunkt innerhalb des beleuchteten Oberflächenbereichs. Das Sensorsignal des ersten Sensors oder das Sensorsignal des zweiten Sensors oder beide Sensorsignale können somit zur Ermittlung des Abstands des Messpunkts von der Detektoreinrichtung verwendet werden. So kann es beispielsweise vorgesehen sein, dass dann, wenn nur das Sensorsignal des ersten Sensors innerhalb des Dynamikbereichs des jeweiligen Sensors liegt und der zweite Sensor über- oder untersteuert ist, das Signal des ersten Sensors zur Abstandsermittlung verwendet und das Signal des zweiten Sensors nicht genutzt wird, oder umgekehrt. Weiter kann es etwa vorgesehen sein, dass in dem Fall, dass beide Sensorsignale innerhalb des jeweiligen Dynamikbereichs liegen, beide zur Abstandsermittlung verwendet werden, um beispielsweise durch Mittelwertbildung eine Ermittlung des Abstandswerts mit höherer Genauigkeit zu ermöglichen, oder es kann ein kombiniertes Sensorsignal durch gewichtete Überlagerung der einzelnen Sensorsignale erzeugt und zur Abstandsermittlung verwendet werden. In dem Fall, dass ein Messpunkt auf mehrere Pixel eines Sensors abgebildet wird und das Sensorsignal durch die Mehrzahl der entsprechenden Ladungen bzw. Pixelwerte oder auch beispielsweise als die Summe oder ein Mittelwert der Pixelwerte gebildet wird, kann das Sensorsignal insbesondere dann als außerhalb des Dynamikbereichs des Sensors angesehen werden, wenn dies für mindestens eines der betreffenden Pixel der Fall ist.

Die Sensorsignale oder auch ein daraus von einer Prozessoreinrichtung des Sensorsystems ermittelter Abstandswert können bzw. kann an eine Steuerungseinrichtung des Koordinatenmessgeräts weitergegeben werden. Die Steuerungseinrichtung ist zur Ermittlung von Raumkoordinaten von Messpunkten innerhalb des Oberflächenbereichs des Messobjekts aufgrund der Sensorsignale bzw. der Abstandswerte ausgebildet, wobei die Positionswerte der Achsen des Koordinatenmessgeräts sowie ggf. der Drehachsen einer Drehschwenkeinrichtung, an der das optische Sensorsystem angeordnet sein kann, zur Errechnung der Raumkoordinaten verwendet werden können.

Dadurch, dass der erste und der zweite Sensor Sensorsignale unterschiedlicher Signalstärke liefern, wird es ermöglicht, in einem erweiterten Bereich der Intensität der aufgenommenen reflektierten Beleuchtungsstrahlung mindestens ein zur Abstandsbestimmung auswertbares Sensorsignal zu erhalten. So kann beispielsweise dann, wenn das stärkere der beiden Sensorsignale an oder über einer Sättigungsgrenze des betreffenden Sensors liegt, das schwächere Sensorsignal zur Abstandsbestimmung auswertbar sein. Ferner kann, wenn das schwächere der beiden Sensorsignale für eine ausreichend genaue Abstandsbestimmung zu schwach ist, das stärkere hierfür ausreichend sein. Durch die erfindungsgemäße Ausgestaltung des optischen Sensorsystems kann somit ein erweiterter Dynamikbereich erreicht werden, der sowohl bei starker Reflexion, also beispielsweise bei einer in die Detektoroptik gerichteten Reflexion der Beleuchtungsstrahlung an einer glänzenden Oberfläche, als auch bei einer schwachen Reflexion, beispielsweise bei einer von der Detektoroptik fort gerichteten Reflexion an einer glänzenden Oberfläche, eine Abstandsbestimmung und damit eine Erfassung von Koordinaten des betreffenden Messpunkts ermöglicht. Somit kann eine Erfassung der Koordinaten von Messpunkten in sehr unterschiedlich reflektierenden Oberflächenbereichen des Messobjekts ermöglicht werden. Dadurch, dass die jeweiligen Sensorsignale gleichzeitig aufgenommen werden können, kann gewährleistet werden, dass beide Sensoren den gleichen Oberflächenbereich des Messobjekts aufnehmen und somit auch während einer Bewegung des optischen Sensorsystems, etwa beim Scannen, eine genaue Abstandsmessung erfolgen kann. Somit ist auf einfache und sichere Weise eine Erhöhung des Dynamikbereichs des optischen Sensorsystems möglich, ohne dass eine Reduzierung der Messgeschwindigkeit insbesondere beim Scannen erforderlich ist.

Vorzugsweise sind der erste und der zweite Sensor jeweils als Bildsensor ausgebildet, beispielsweise als CCD- oder CMOS-Sensor. Das von dem jeweiligen Sensor erzeugte Sensorsignal ist somit ein Bildsignal, das zur Abstandsermittlung genutzt wird. Dabei können die Bildsignale der einzelnen Sensoren bei der Abstandsermittlung zugrunde gelegt werden oder auch etwa ein kombiniertes Bildsignal, das mit an sich bekannten Verfahren zur Berechnung eines HDR (High Dynamic Range) - Bilds erzeugt worden sein kann. Alternativ können der erste und der zweite Sensor unterschiedliche Teilmengen der Pixel eines Bildsensors sein, die die jeweiligen Sensorsignale erzeugen können und die beispielsweise separaten Teilbereichen der Sensorfläche entsprechen oder auch schachbrettartig ineinander greifende Muster bilden können. Hierdurch kann eine genaue Abstandsbestimmung und bei der Beleuchtung mit einem entsprechenden Muster bzw. einer strukturierten Beleuchtung eine gleichzeitige Erfassung einer Vielzahl von Messpunkten ermöglicht werden. Weiter alternativ können der erste und der zweite Sensor beispielsweise als Liniensensoren ausgebildet sein.

Gemäß einer bevorzugten Ausführungsform der Erfindung weist die Detektoroptik einen Strahlteiler zur Aufteilung der aufgenommenen reflektierten Beleuchtungsstrahlung in einen ersten Strahlengang, über den der erste Anteil zum ersten Sensor weitergeleitet wird, und einen zweiten Strahlengang, über den der zweite Anteil zum zweiten Sensor gelangt, auf. Der Strahlteiler kann beispielsweise als Neutralteiler mit gleichem oder unterschiedlichem Teilungsverhältnis ausgebildet sein. Hierdurch kann auf einfache Weise eine Weiterleitung des ersten Anteils der von der Detektoranordnung aufgenommenen Beleuchtungsstrahlung auf den ersten Sensor und des zweiten Anteils der aufgenommenen Beleuchtungsstrahlung, der von demselben Messpunkt auf der Oberfläche des Messobjekts kommt, auf den zweiten Sensor erreicht werden. Alternativ kann die Detektoroptik mindestens zwei separate Teiloptiken umfassen, die jeweils dem ersten bzw. dem zweiten Bildsensor zugeordnet sind und einen jeweiligen Anteil der reflektierten Beleuchtungsstrahlung auf den ersten bzw. den zweiten Sensor weiterleiten.

Vorzugsweise ist der Strahlteiler ein Neutralteiler mit asymmetrischem Teilungsverhältnis. Hierdurch kann auf einfache Weise erreicht werden, dass die erzeugten Sensorsignale des ersten und des zweiten Sensors unterschiedliche Signalstärken haben bzw. der erste und der zweiten Sensor vom gleichen Messpunkt unterschiedliche Beleuchtungsstärken empfangen und einander entsprechende Pixel des ersten und des zweiten Sensors unterschiedliche Pixelwerte haben. Ferner ist hierdurch eine optimale Ausnutzung des von der Detektoranordnung aufgenommenen Lichts erreichbar, was insbesondere bei schwach oder gerichtet reflektierenden Oberflächen vorteilhaft ist.

Alternativ oder zusätzlich kann in vorteilhafter Weise in einem jeweiligen Strahlengang zwischen dem Strahlteiler und dem ersten oder dem zweiten Sensor ein Graufilter und/oder eine Blende angeordnet sein. Es kann auch vorgesehen sein, dass in beiden Strahlengängen jeweils ein Graufilter bzw. eine Blende angeordnet ist, wobei in diesem Fall die Graufilter unterschiedliche Transmissionskoeffizienten bzw. die Blenden unterschiedliche Öffnungen haben. Durch das Graufilter bzw. die Blende wird der über den jeweiligen Strahlengang zum ersten bzw. zweiten Sensor weitergeleitete Anteil der aufgenommenen reflektierten Beleuchtungsstrahlung verringert. Hierdurch kann es ebenfalls auf einfache und sichere Weise erreicht werden, dass die Sensorsignale unterschiedliche Signalstärken haben bzw. die Pixelwerte einander entsprechender Pixel des ersten und des zweiten Sensors unterschiedlich sind.

In bevorzugter Weise ist der Strahlteiler als dichroitischer Strahlteiler ausgebildet, so dass unterschiedliche Farbanteile der aufgenommenen reflektierten Beleuchtungsstrahlung zum ersten und zum zweiten Sensor weitergeleitet werden. Alternativ oder zusätzlich kann es vorgesehen sein, dass in mindestens einem Strahlengang zum ersten bzw. zum zweiten Sensor ein Farbfilter angeordnet ist, beispielsweise können in den Strahlengängen zum ersten und zum zweiten Sensor jeweils unterschiedliche Farbfilter angeordnet sein. Ebenso kann beispielsweise dann, wenn der erste und der zweite Sensor durch unterschiedliche Pixelmengen eines Bildsensors gebildet werden, die in Form schachbrettartig ineinander greifender Muster angeordnet sind, ein entsprechendes schachbrettartiges Muster von Farbfiltern vorgesehen sein, etwa nach Art eines Bayer-Filters. Hierdurch kann es ebenfalls erreicht werden, dass zum ersten und zum zweiten Sensor unterschiedliche Farbanteile der aufgenommenen reflektierten Beleuchtungsstrahlung weitergeleitet werden. Da in der Regel die Sensoren bei unterschiedlichen Wellenlängen unterschiedlich empfindlich sind bzw. unterschiedliche Quanteneffizienzen haben, kann dadurch auf einfache Weise eine unterschiedliche Ausnutzung der Dynamikbereiche des ersten und des zweiten Sensors erreicht werden.

Weiter alternativ oder zusätzlich kann es vorgesehen sein, dass der erste und der zweite Sensor jeweils ein Bild mit unterschiedlich langen Belichtungszeiten aufnehmen, wobei sich die Belichtungszeiten zumindest teilweise überlappen. Vorzugsweise ist das Sensorsystem derart eingerichtet, insbesondere zur Steuerung einer Belichtung bzw. Integrationszeit des ersten und des zweiten Sensors in solcher Weise eingerichtet, dass die jeweiligen Mitten oder Schwerpunkte der Belichtungen bzw. Integrationszeiten des ersten und des zweiten Sensors zumindest näherungsweise gleichzeitig sind. Insbesondere kann eine Prozessoreinrichtung des Sensorsystems oder auch eine Steuerungseinrichtung des Koordinatenmessgeräts derart eingerichtet sein. Auch hierdurch kann auf einfache und sichere Weise erreicht werden, dass die Sensorsignale des ersten und des zweiten Sensors unterschiedliche Signalstärken haben, wobei beide Signale im Wesentlichen gleichzeitig aufgenommen werden.

Gemäß einer weiteren Ausführungsform der Erfindung sind der erste und der zweite Sensor derart unterschiedlich ausgebildet, dass sie unterschiedliche Sensitivitäten bzw. unterschiedliche Quanteneffizienzen oder Verstärkungen bzw. unterschiedliche Dynamikbereiche haben, insbesondere bei gleicher Wellenlänge. Auch hierdurch kann es erreichbar sein, dass bei einer gleichzeitigen Aufnahme der reflektierten Beleuchtungsstrahlung durch den ersten und den zweiten Sensor die jeweiligen Dynamikbereiche unterschiedlich ausgenutzt werden.

Gemäß einer bevorzugten Ausführungsform der Erfindung schließen sich die effektiven Sensitivitätsbereiche des ersten und des zweiten Sensors aneinander an oder überlappen sich in einem Randbereich. Die effektiven Sensitivitätsbereiche der Sensoren sind dabei durch die Sensitivitätsbereiche der Sensoren gegeben, insbesondere diejenigen Bereiche der Beleuchtungsstärke, in denen ein für die Abstandsbestimmung auswertbares Signal erzeugt wird, gewichtet im umgekehrten Verhältnis der jeweiligen Beleuchtungsstärken bzw. Lichtmengen, die die einzelnen Sensoren gleichzeitig von dem Oberflächenbereich des Messobjekts erhalten. So kann beispielsweise bei einem gegebenen Messpunkt und einer gegebenen Beleuchtungsstrahlung ein solcher Anteil der vom Messobjekt reflektierten Beleuchtungsstrahlung zum ersten Sensor gelangen, dass der erste Sensor eine Beleuchtungsstärke innerhalb seines Sensitivitäts- bzw. Dynamikbereichs erhält und daher ein zur Abstandsbestimmung auswertbares Signal liefert, während der zweite Sensor eine zu niedrige Beleuchtungsstärke erhält. Wird die Leistung der Beleuchtungsanordnung gesteigert oder nimmt die Reflexion vom Messobjekt zu und gelangt die Beleuchtungsstärke des ersten Sensors dadurch an die obere Grenze des Sensitivitätsbereichs, so liegt dann die Beleuchtungsstärke des zweiten Sensors am unteren Rand des Sensitivitätsbereichs des zweiten Sensors, so dass bei weiterer Zunahme der Beleuchtungsleistung oder der Reflexion die Beleuchtungsstärke des zweiten Sensors innerhalb dessen Sensitivitätsbereichs liegt und der zweite Sensor somit ein für die Abstandsbestimmung nutzbares Signal liefert. Dies bedeutet, dass die Eigenschaften der optischen Elemente der Detektoroptik, beispielsweise das Teilungsverhältnis des Strahlteilers oder die Transmissionskoeffizienten der Filter, sowie ggf. die Quanteneffizienzen der Sensoren entsprechend aufeinander abgestimmt sind. Dadurch, dass sich die effektiven Sensitivitätsbereiche der Sensoren aneinander anschließen oder sich jeweils nur am Rand überlappen, kann ein besonders großer Dynamikbereich der Detektoranordnung erreicht werden.

Anders ausgedrückt, wird die erfindungsgemäße Aufgabenstellung gemäß einem Aspekt der Erfindung dadurch gelöst, dass die Beleuchtungsstärke bzw. Lichtleistung, die von demselben Messpunkt zum ersten und zum zweiten Sensor gelangt, unterschiedlich ist. Gemäß diesem Aspekt ist ein erfindungsgemäßes optisches Sensorsystem gegenüber einem gattungsgemäßen Sensorsystem dadurch ausgezeichnet, dass die Sensoranordnung einen ersten und einen zweiten Sensor umfasst und die Detektoroptik einen Strahlteiler zum Weiterleiten eines ersten Anteils der reflektierten Beleuchtungsstrahlung in einen ersten Strahlengang zum ersten Sensor und zum Weiterleiten eines zweiten Anteils der reflektierten Beleuchtungsstrahlung in einen zweiten Strahlengang zum zweiten Sensor umfasst, wobei der Strahlteiler ein asymmetrisches Teilungsverhältnis aufweist und/oder im ersten bzw. im zweiten Strahlengang unterschiedliche Graufilter und/oder unterschiedliche Blenden angeordnet sind. Dabei können die Sensoren vom gleichen Typ sein, und der Strahlteiler kann ein Neutralteiler sein. Aufgrund der unterschiedlichen Beleuchtungsstärken sind die Signale der Sensoren unterschiedlich bzw. nutzen den jeweiligen Sensitivitätsbereich unterschiedlich aus, so dass der gesamte Dynamikbereich erweitert wird. Gemäß einem zweiten Aspekt der Erfindung wird die Aufgabe dadurch gelöst, dass die Sensoren selbst unterschiedliche Sensitivitäten aufweisen oder mit Licht unterschiedlicher Wellenlänge beleuchtet werden, so dass ebenfalls unterschiedliche Sensorsignale erzeugt werden. Gemäß einem weiteren Aspekt der Erfindung wird es durch unterschiedliche Belichtungszeiten erreicht, dass auf den ersten und den zweiten Sensor vom selben Messpunkt unterschiedlich Lichtmengen gelangen. Auch in diesen Fällen werden die jeweiligen Sensitivitätsbereiche der Sensoren unterschiedlich ausgenutzt, so dass der gesamte Dynamikbereich des Sensorsystems vergrößert werden kann.

Gemäß einer weiteren bevorzugten Ausführungsform der Erfindung umfasst die Sensoranordnung mindestens einen dritten Sensor, und die Detektoroptik ist zur Weiterleitung eines dritten Anteils der vom beleuchteten Oberflächenbereich des Messobjekts reflektierten Beleuchtungsstrahlung auf den dritten Sensor ausgebildet. Die Sensoranordnung kann weitere Sensoren umfassen, zu denen von der Detektoroptik ein jeweiliger weiterer Anteil der reflektierten Beleuchtungsstrahlung weitergeleitet wird. Die Detektoroptik umfasst hierfür beispielsweise einen zweiten bzw. weitere Strahlteiler, der bzw. die jeweils einen entsprechenden Anteil der reflektierten Beleuchtungsstrahlung in einen dritten Strahlengang bzw. in weitere Strahlengänge zum dritten Sensor bzw. zu den weiteren Sensoren einkoppeln. Der zweite bzw. die weiteren Strahlteiler können wie oben beschrieben ausgebildet sein und beispielsweise optische Elemente, wie etwa Filter oder Blenden, enthalten. Der dritte bzw. die weiteren Sensoren können ebenfalls wie oben beschrieben ausgebildet sein und insbesondere unterschiedliche Sensitivitäts- bzw. Dynamikbereiche aufweisen, wobei sich die effektiven Sensitivitätsbereiche aneinander anschließen oder in jeweiligen Randbereichen überlappen können. Hierdurch lässt sich der gesamte Dynamikbereich des Sensorsystems weiter erweitern.

Gemäß einem weiteren Aspekt der Erfindung, der auch unabhängig von den kennzeichnenden Merkmalen des Anspruchs 1 beansprucht wird, umfasst die Sensoranordnung eine Farbkamera, die zum Erzeugen mindestens eines ersten Sensorsignals und eines zweiten Sensorsignals ausgebildet ist, wobei das erste und das zweite Sensorsignal einem ersten und einem zweiten Wellenlängenbereich entsprechen. Der erste und der zweite Wellenlängenbereich sind unterschiedliche Wellenlängenbereiche, die sich beispielsweise in Randbereichen überlappen können und die insbesondere unterschiedliche Farbanteile darstellen; das erste und das zweite Sensorsignal sind insbesondere ein erstes und ein zweites Farbsignal der Farbkamera. Die Farbkamera kann beispielsweise eine 1-Chip- oder eine 3-Chip-Farbvideokamera sein, wobei bei einer 1-Chip-Kamera die unterschiedlichen Sensorsignale durch unterschiedliche Pixelmengen des Chips erzeugt werden können, die beispielsweise mittels eines Bayer-Filters den unterschiedlichen Farbanteilen zugeordnet sein können. Dabei kann das erste Sensorsignal das Signal eines einzelnen Pixels oder einer Teilmenge von Pixeln sein, die einem ersten Farbanteil zugeordnet sind, und somit das Pixel bzw. die Teilmenge von Pixeln als erster Sensor angesehen werden; entsprechendes gilt für das zweite sowie ggf. ein drittes Sensorsignal und die Pixel bzw. Teilmengen von Pixeln, die einem zweiten bzw. dritten Farbanteil zugeordnet sind. Gemäß diesem Aspekt der Erfindung ist die Beleuchtungsanordnung derart ausgebildet und eingerichtet, dass die auf den Oberflächenbereich des Messobjekts projizierte Beleuchtungsstrahlung zumindest den ersten und den zweiten Wellenlängenbereich bzw. Farbanteil in jeweils einer solchen Intensität umfasst, dass das erste Sensorsignal eine unterschiedliche Signalstärke wie das zweite Sensorsignal hat, und somit insbesondere das erste Farbsignal unterschiedlich stark wie das zweite Farbsignal vom selben Messpunkt ist. Dies gilt insbesondere auch dann, wenn der Reflexionsgrad der Oberfläche des Messobjekts im ersten Wellenlängenbereich gleich oder im Wesentlichen gleich wie im zweiten Wellenlängenbereich ist, was bei technischen Messobjekten häufig angenommen werden kann. In besonders bevorzugter Weise ist die Farbkamera zum Erzeugen von drei Farbsignalen, etwa gemäß dem RGB-System, und die Beleuchtungsanordnung zum Erzeugen von Beleuchtungsstrahlung in den drei entsprechenden Wellenlängenbereichen ausgebildet. Gemäß diesem Aspekt der Erfindung wird es somit durch unterschiedlich helle Beleuchtung in den einzelnen Farbanteilen der Farbkamera erreicht, dass die Sensorsignale unterschiedliche Signalstärken haben und die jeweiligen Dynamikbereiche unterschiedlich weit ausgenutzt werden, so dass der gesamte Dynamikbereich des Sensorsystems erweitert werden kann. Insbesondere bei einer 3-Chip-Kamera kann die Farbkamera bzw. das Detektorsystem zusätzlich wie oben beschrieben ausgebildet sein.

In besonders bevorzugter Weise umfasst das Sensorsystem eine Prozessoreinrichtung, die derart zur Ermittlung des Abstands des Oberflächenbereichs des Messobjekts bzw. eines Messpunkts vom Sensorsystem eingerichtet ist, dass dann, wenn das Sensorsignal des ersten Sensors innerhalb des Dynamikbereichs des ersten Sensors liegt und das Sensorsignal des zweiten Sensors außerhalb des Dynamikbereichs des zweiten Sensors liegt, d.h. der zweite Sensor über- oder untersteuert ist, das Sensorsignal des ersten Sensors zur Abstandsermittlung verwendet und das Sensorsignal des zweiten Sensors hierfür nicht genutzt wird. Weiter kann die Prozessoreinrichtung derart eingerichtet sein, dass im umgekehrten Fall, dass das Sensorsignal des zweiten Sensors innerhalb des Dynamikbereichs des zweiten Sensors und das Sensorsignal des ersten Sensors außerhalb des Dynamikbereichs des ersten Sensors liegt und somit der erste Sensor über- oder untersteuert ist, das Sensorsignal des zweiten Sensors zur Abstandsermittlung verwendet und das Sensorsignal des ersten Sensors nicht genutzt wird. Insbesondere kann die Prozessoreinrichtung dann, wenn das Sensorsystem drei oder mehr Sensoren umfasst, derart eingerichtet sein, dass nur ein oder mehrere Sensorsignale zur Abstandsermittlung verwendet werden, die innerhalb des Dynamikbereichs des jeweiligen Sensors liegen, und die übrigen Sensorsignale nicht verwendet werden. Insbesondere ist die Prozessoreinrichtung zur Durchführung des nachfolgend beschriebenen Verfahrens eingerichtet. Die Prozessoreinrichtung kann mit der Beleuchtungsanordnung und der Detektoranordnung des optischen Sensorsystems eine Einheit bilden, die beispielsweise als Tastkopf eines Koordinatenmessgeräts oder als Teil eines Tastkopfs, etwa als optischer Taster, ausgebildet sein kann. Die Prozessoreinrichtung kann aber auch einer Steuerungseinrichtung eines Koordinatenmessgeräts, an dem das optische Sensorsystem betrieben werden kann, zugeordnet sein, oder die Steuerungseinrichtung selbst kann entsprechend eingerichtet sein.

Bei einem erfindungsgemäßen Verfahren zum Erfassen eines Messpunkts auf einer Oberfläche eines Messobjekts mit einem Koordinatenmessgerät, das ein optisches Sensorsystem aufweist, wird eine Beleuchtungsstrahlung bzw. eine Lichtverteilung auf einen Oberflächenbereich des Messobjekts projiziert. Erfindungsgemäß wird ein erster Anteil der vom Oberflächenbereich des Messobjekts reflektierten Beleuchtungsstrahlung zu einem ersten Sensor des Sensorsystems weitergeleitet und gleichzeitig ein zweiter Anteil der vom Oberflächenbereich des Messobjekts reflektierten Beleuchtungsstrahlung zu einem zweiten Sensor des Sensorsystems weitergeleitet, wobei die Sensoren aufgrund des jeweiligen Anteils der reflektierten Beleuchtungsstrahlung ein jeweiliges Sensorsignal erzeugen, und wobei das aufgrund des ersten Anteils erzeugte Sensorsignal des ersten Sensors eine unterschiedliche Signalstärke wie das aufgrund des zweiten Anteils erzeugte Sensorsignal des zweiten Sensors hat. Aufgrund des ersten und/oder des zweiten Sensorsignals, die demselben Oberflächenbereich des Messobjekts entsprechen, wird ein Abstand eines innerhalb des Oberflächenbereichs befindlichen Messpunkts vom Sensorsystem ermittelt. Insbesondere kann es vorgesehen sein, dass in dem Fall, dass das Sensorsignal eines Sensors innerhalb des Dynamikbereichs des jeweiligen Sensors liegt und der andere Sensor über- oder untersteuert ist, nur das Signal des erstgenannten Sensors zur Abstandsermittlung verwendet wird. Weiterhin kann es vorgesehen sein, dass in dem Fall, dass beide Sensorsignale innerhalb des jeweiligen Dynamikbereichs liegen, beide zur Abstandsermittlung verwendet werden, um beispielsweise durch Mittelwertbildung oder aus einem kombinierten Signal eine Ermittlung des Abstandswerts mit höherer Genauigkeit zu ermöglichen. Aus dem Abstandswert, zusammen mit den Positionswerten der Achsen des Koordinatenmessgeräts sowie ggf. der Drehachsen einer Drehschwenkeinrichtung können sodann die Raumkoordinaten des Messpunkts ermittelt werden. Gemäß vorteilhafter Ausführungsformen des Verfahrens kann es vorgesehen sein, dass ebenfalls gleichzeitig ein dritter Anteil oder weitere Anteile der vom Oberflächenbereich des Messobjekts reflektierten Beleuchtungsstrahlung zu einem dritten Sensor bzw. zu weiteren Sensoren des Sensorsystems weitergeleitet wird bzw. werden, dass der dritte Sensor bzw. die weiteren Sensoren aufgrund eines jeweiligen Anteils ein jeweiliges Sensorsignal erzeugen, welches nochmals eine unterschiedliche Signalstärke wie das erste und das zweite Sensorsignal hat, und welches in entsprechender Weise zur Ermittlung des Abstands des Messpunkts verwendet wird. Das optische Sensorsystem des Koordinatenmessgeräts ist insbesondere wie zuvor beschrieben ausgebildet.

Insbesondere kann es vorgesehen sein, dass das Sensorsignal des ersten Sensors erfasst und mit einem unteren und einem oberen Grenzwert des Dynamikbereichs des ersten Sensors verglichen wird. Auf diese Weise kann ermittelt werden, ob das Sensorsignal des ersten Sensors innerhalb oder außerhalb des durch den unteren und den oberen Grenzwert begrenzten Dynamikbereichs des ersten Sensors liegt. Der obere Grenzwert des Dynamikbereichs kann dabei beispielsweise durch eine Sättigungsgrenze des ersten Sensors gegeben sein, und der untere Grenzwert kann etwa aufgrund eines Grundrauschens des Sensors bestimmt sein; insbesondere können der untere und der obere Grenzwert des ersten Sensors entsprechend vorbestimmt und gespeichert sein. In entsprechender Weise kann ermittelt werden, ob das Sensorsignal des zweiten sowie ggf. weiterer Sensoren innerhalb oder außerhalb des Dynamikbereichs des jeweiligen Sensors liegt, wobei untere und obere Grenzwerte der betreffenden Sensoren ebenfalls vorbestimmt und gespeichert sein können. Die Ermittlung des Abstands des Oberflächenbereichs bzw. des Messpunkts erfolgt dann nur aufgrund desjenigen Sensorsignals oder derjenigen Sensorsignale, das bzw. die innerhalb des Dynamikbereichs des jeweiligen Sensors liegt bzw. liegen. Sofern festgestellt wird, dass eines der Sensorsignale unterhalb des unteren Grenzwerts oder oberhalb des oberen Grenzwerts des Dynamikbereichs des betreffenden Sensors liegt, wird dieses nicht zur Abstandsermittlung verwendet.

Gemäß einer bevorzugten Ausführungsform des erfindungsgemäßen Verfahrens werden das Sensorsignal des ersten und das Sensorsignal des zweiten Sensors, sowie ggf. das Sensorsignal eines dritten Sensors oder die Sensorsignale weiterer Sensoren, während einer Bewegung des Sensorsystems relativ zum Oberflächenbereich des Messobjekts erzeugt, beispielsweise beim Scannen. Hierbei kann ausgenutzt werden, dass durch die gleichzeitige Weiterleitung der jeweiligen Anteile der reflektierten Beleuchtungsstrahlung zu den jeweiligen Sensoren gewährleistet ist, dass die Signale der Sensoren den Abstand zu demselben Messpunkt darstellen und dass daher keine Einschränkung der Geschwindigkeit der Bewegung des Sensorsystems, insbesondere der Scanbewegung, zur Erhöhung des Dynamikbereichs bei der Abstandsbestimmung erforderlich ist.

Ein erfindungsgemäßes Koordinatenmessgerät weist einen Tastkopf auf, der als ein optisches Sensorsystem ausgebildet ist oder ein solches umfasst, wobei das optische Sensorsystem wie zuvor beschrieben ausgebildet ist. Im Übrigen kann das Koordinatenmessgerät in an sich bekannter Weise aufgebaut sein und eine Mehrzahl von motorisch antreibbaren Achsen aufweisen, mittels derer der Tastkopf relativ zum Messobjekt positioniert und/oder orientiert werden kann. Beispielsweise kann das Koordinatenmessgerät drei aufeinander aufbauende, zueinander senkrechte lineare Achsen umfassen, die Maßstäbe und Positionsgeber aufweisen, sowie ggf. eine oder mehrere Drehachsen. Das Koordinatenmessgerät kann ferner eine Steuerungseinrichtung umfassen, die zur Ermittlung von Raumkoordinaten von Messpunkten in dem beleuchteten Oberflächenbereich des Messobjekts aufgrund der Sensorsignale bzw. aufgrund der von einer Prozessoreinrichtung des Sensorsystems gelieferten Abstandswerte eingerichtet ist. Hierfür können ferner die Gebersignale der Achsen des Koordinatenmessgeräts sowie ggf. weitere Daten verwendet werden. Insbesondere ist das Koordinatenmessgerät zur Durchführung des zuvor beschriebenen Verfahrens und in besonders vorteilhafter Weise zum Scannen mittels des zuvor beschriebenen Verfahrens ausgebildet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Aspekte der Erfindung ergeben sich aus der nachfolgenden Beschreibung eines bevorzugten Ausführungsbeispiels und der beigefügten Zeichnung. Es zeigen:
Fig. 1 beispielhaft ein Koordinatenmessgerät mit einem optischen Sensorsystem gemäß einem Ausführungsbeispiel der Erfindung;
Fig. 2 ein optisches Sensorsystem gemäß einem ersten Ausführungsbeispiel der Erfindung in einer schematischen Darstellung;
Fig. 3 die Detektoranordnung eines optischen Sensorsystems gemäß einem zweiten Ausführungsbeispiel der Erfindung in einer schematischen Darstellung;
Fig. 4 die Detektoranordnung eines optischen Sensorsystems gemäß einem dritten Ausführungsbeispiel der Erfindung in einer schematischen Darstellung;
Fig. 5a bis 5c die Funktionsweise eines optischen Sensorsystems gemäß einem vierten Ausführungsbeispiel der Erfindung;
Fig. 6 ein optisches Sensorsystem gemäß einem fünften Ausführungsbeispiel der Erfindung in einer schematischen Darstellung;
Fig. 7a bis 7c die Intensitätsverteilung auf dem Bildsensor der Farbkamera des Sensorsystems gemäß Fig. 6 bei einer beispielhaft gezeigten Messung sowie zwei unterschiedlich vergrößerte Bildausschnitte.

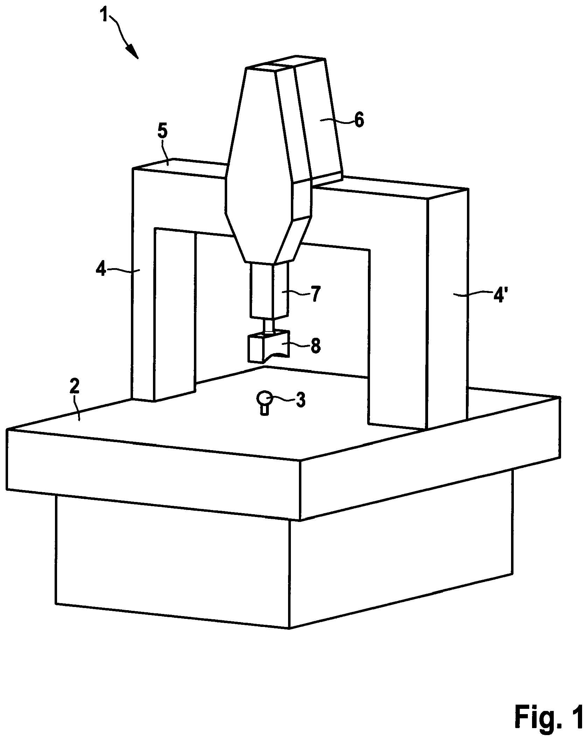

In Fig. 1 ist beispielhaft ein erfindungsgemäßes Koordinatenmessgerät gezeigt. Als Beispiel ist ein Koordinatenmessgerät 1 in Portalbauweise dargestellt, das Koordinatenmessgerät könnte aber ebenso eine andere Bauweise aufweisen, etwa Ausleger-, Brücken- oder Ständerbauweise. Das Koordinatenmessgerät 1 umfasst eine Grundstruktur mit einem Tisch 2 zur Aufnahme eines Messobjekts, das hier der Einfachheit halber als Kugel 3 dargestellt ist. Auf der Grundstruktur ist in einer horizontalen Richtung verschiebbar eine Brücke mit zwei vertikalen Säulen 4, 4' und einer Traverse 5 gelagert. Ein Schlitten 6 ist entlang der Traverse 5 verschiebbar gelagert, und im Schlitten 6 ist in vertikaler Richtung eine Pinole 7 verschiebbar. Am unteren Ende der Pinole 7 ist ein Tastkopf angeordnet, der im gezeigten Ausführungsbeispiel als optisches Sensorsystem 8 ausgebildet ist. Gemäß einem nicht dargestellten Ausführungsbeispiel könnte der Tastkopf zur Aufnahme eines derartigen optischen Sensorsystems zusätzlich zu oder wechselweise mit einem taktilen Taster ausgebildet sein. Durch den gezeigten Aufbau sind drei zueinander senkrechte Bewegungsachsen realisiert, mittels derer das optische Sensorsystem 8, das unten näher erläutert wird, in beliebige Positionen relativ zum Messobjekt (Kugel 3) gebracht werden kann. Mit dem optischen Sensorsystem 8 kann der Abstand zu einem Messpunkt auf der Oberfläche der Kugel 3 ermittelt werden. Zusammen mit den Positionen der drei Achsen des Koordinatenmessgeräts 1 ergeben sich hieraus die räumlichen Koordinaten des Messpunkts.

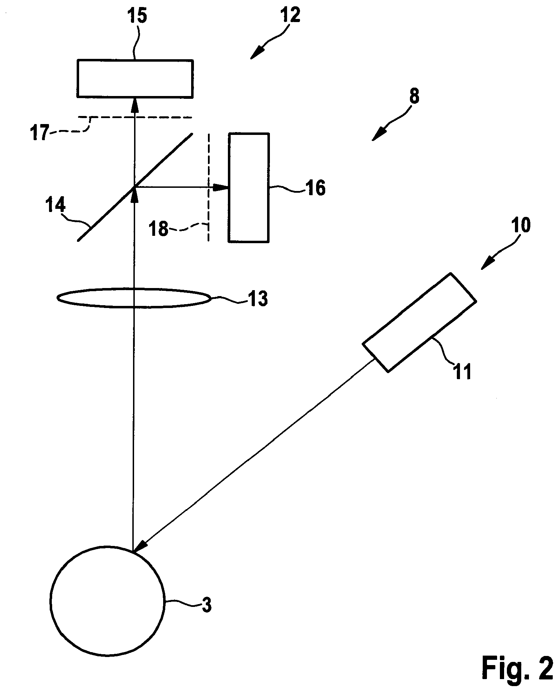

In Fig. 2 ist der prinzipielle Aufbau eines optischen Sensorsystems gemäß einem ersten Ausführungsbeispiel der Erfindung gezeigt. Das optische Sensorsystem 8 umfasst eine Beleuchtungsanordnung 10 mit einem Projektor 11, der eine Lichtquelle und eine Beleuchtungsoptik enthält, und eine Detektoranordnung 12. Das optische Sensorsystem 8 kann in einem Gehäuse aufgenommen sein, entsprechend dem in Fig. 1 gezeigten (in Fig. 2 nicht dargestellt).

Der Projektor 10 projiziert eine Beleuchtungsstrahlung auf die Oberfläche des Messobjekts (Kugel 3). Die Beleuchtungsstrahlung erzeugt eine Lichtverteilung etwa in Form eines Punktes, einer Linie oder eines flächenhaften Musters auf der Oberfläche der Kugel 3. Von der Oberfläche der Kugel 3 wird zumindest ein Teil der eingestrahlten Beleuchtungsstrahlung in Richtung auf die Detektoranordnung 12 reflektiert bzw. gestreut. Die Beleuchtungsrichtung, in der der Projektor 11 die Beleuchtungsstrahlung auf die Kugel 3 richtet, und die Blickrichtung der Detektoranordnung, aus welcher von der Kugel 3 rückgestrahlte Beleuchtungsstrahlung erfasst wird, stehen in einem Winkel zueinander und schneiden sich im Bereich der Oberfläche der Kugel 3.

Die Detektoranordnung 12 weist eine Detektoroptik auf, die ein symbolisch als Linse dargestelltes Objektiv 13 und einen Strahlteiler 14 umfasst. Der Strahlteiler 14 teilt das von der Kugel 3 reflektierte Licht in einen ersten Strahlengang zu einem ersten Bildsensor 15 und in einen zweiten Strahlengang zu einem zweiten Bildsensor 16 auf. Im ersten Strahlengang ist ein erstes Filter 17 und im zweiten Strahlengang ein zweites Filter 18 angeordnet, die gleiche oder unterschiedliche Transmissionskoeffizienten haben können. Das Objektiv 13 bildet die Oberfläche des Messobjekts (Kugel 3) auf den ersten und den zweiten Bildsensor 15, 16 ab. Die Bildsensoren 15, 16 liegen in einander entsprechenden Bildebenen, so dass die Abbildungsmaßstäbe gleich sind. Um die Signale der Bildsensoren 15, 16 wie unten beschrieben auswerten zu können, können die Bildsensoren 15, 16 mechanisch zueinander ausrichtbar sein und/oder es kann bei der Auswertung eine softwaretechnische Ausrichtung der Einzelbilder zueinander erfolgen.

Bei dem in Fig. 2 gezeigten Aufbau können beispielsweise der Strahlteiler 14 ein asymmetrisches Teilungsverhältnis und/oder die Filter unterschiedliche Transmissionskoeffizienten haben, wobei die Parameter derart gewählt sind, dass sich die effektiven Sensitivitätsbereiche des ersten und des zweiten Bildsensors 15, 16 aneinander anschließen. So hat beispielsweise ein Bildsensor vom Typ Sony Pregius IMX265 einen Dynamikbereich von etwa 72 dB, der sich digital auf eine Bittiefe von 12 Bit erstreckt. Wird ein Strahlteiler mit einem Teilungsverhältnis von 4:96 und zusätzlich im lichtschwächeren Zweig ein Graufilter mit einer Transmission von 25% verwendet, so kommt in diesem lichtschwächeren Zweig nur 1/100 der Lichtleistung im Vergleich zum lichtstärkeren Zweig am Bildsensor an. In dieser Konstellation, bei der beide Bildsensoren 15, 16 vom gleichen Typ sind, schließen die effektiven Sensitivitätsbereiche der beiden Bildsensoren mit einem Überlappungsbereich aneinander an, und es kann ein Gesamtbild mit einer Bittiefe von 18 Bit erzeugt werden. Der Dynamikbereich der beiden zusammengeschalteten Bildsensoren entspricht damit etwa dem 100-fachen des einzelnen Bildsensors.

Der Strahlteiler 14 kann auch als dichroitischer Strahlteiler ausgebildet sein und/oder die Filter 17, 18 als Farbfilter. Es können auch Sensoren als Bildsensoren 15, 16 zum Einsatz kommen, die unterschiedliche Quanteneffizienzen bzw. Verstärkungen haben, insbesondere in dem Fall, dass in den beiden Strahlengängen unterschiedliche Wellenlängenbereiche der aufgenommenen Strahlung zu den Bildsensoren 15, 16 gelangen. Anstelle der Filter 17, 18 oder zusätzlich zu den Filtern 17, 18 können auch Blenden vorgesehen sein, die unterschiedliche Öffnungen haben können. Die genannten Eigenschaften der optischen Elemente und der Bildsensoren 15, 16 sind in entsprechender Weise derart aufeinander abgestimmt, dass sich die effektiven Sensitivitätsbereiche der beiden Bildsensoren 15, 16 aneinander anschließen oder in einem Randbereich überlappen.

Das auf den Bildsensoren 15, 16 erzeugte Bild der Oberfläche des Messobjekts (Kugel 3) stellt die vom Projektor 11 auf die Oberfläche der Kugel 3 projizierte Lichtverteilung dar. Aufgrund des Winkels zwischen der Beleuchtungsrichtung und der Beobachtungsrichtung ist die Position des Bilds auf dem jeweiligen Bildsensor 15, 16, beispielsweise bei einer punkt- oder linienförmigen Lichtverteilung die Lage des Maximums der Beleuchtungsstärke und damit die Position desjenigen Pixels mit dem maximalen Signal, von der Entfernung zwischen der Detektoranordnung 12 und der Kugel 3 abhängig, insbesondere vom Abstand zwischen dem Objektiv 13 und dem beleuchteten Oberflächenbereich der Kugel 3. Sofern das vom jeweiligen Bildsensor 15, 16 erzeugte Signal eine derartige Auswertung zulässt, insbesondere wenn das Signal innerhalb eines Dynamikbereichs des betreffenden Bildsensors 15, 16 liegt, kann daher aus dem Signal des Bildsensors 15, 16 auf den Abstand zur Oberfläche der Kugel 3 geschlossen werden. Durch die beschriebene Ausgestaltung der Detektoranordnung 12 ist dies in einem erweiterten Helligkeitsbereich möglich, also auch dann, wenn einzelne Oberflächenbereiche 3 der Kugel sehr viel und andere sehr wenig Licht in die Detektoranordnung zurückwerfen. Dabei kann zur Auswertung jeweils ein Bild eines einzelnen Bildsensors 15, 16 verwendet werden oder, wenn in einem Überlappungsbereich beide Bildsensoren 15, 16 ein auswertbares Signal liefern, beide Bilder oder auch ein Gesamtbild, das etwa aus Teilen der Einzelbilder zusammengesetzt sein kann oder auch aus der Summe der Einzelbilder, jeweils gewichtet mit den Sensitivitätsverhältnissen, berechnet werden kann.

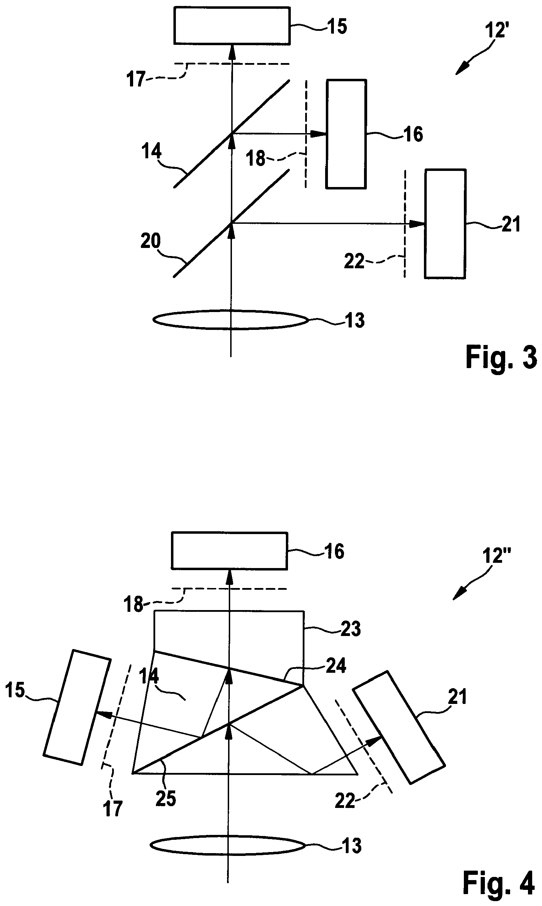

In den Figuren 3 und 4 ist schematisch die Detektoranordnung 12' bzw. 12" eines optischen Sensorsystems gemäß einem zweiten bzw. einem dritten Ausführungsbeispiel der Erfindung dargestellt, wobei das optische Sensorsystem im Übrigen entsprechend dem ersten Ausführungsbeispiel ausgebildet ist.

Wie in Fig. 3 gezeigt, umfasst die Detektoranordnung 12' einen zweiten Strahlteiler 20, der dem zuvor erwähnten Strahlteiler 14 vorgeschaltet ist und der einen dritten Anteil der vom Messobjekt reflektierten Beleuchtungsstrahlung in einen dritten Strahlengang zu einem dritten Bildsensor 21 weiterleitet. Der zweite Strahlteiler 20 kann ebenfalls beispielsweise ein asymmetrisches Teilungsverhältnis haben oder ein dichroitischer Strahlteiler sein. Im dritten Strahlengang ist ein drittes Filter 22 angeordnet, das beispielsweise ein Graufilter oder ein Farbfilter sein kann; anstelle des Filters 22 oder zusätzlich zum Filter 22 kann auch eine Blende im dritten Strahlengang vorgesehen sein. Entsprechend wie beim ersten Ausführungsbeispiel sind die Eigenschaften der optischen Elemente und der Bildsensoren 15, 16, 21 derart aufeinander abgestimmt, dass sich die effektiven Sensitivitätsbereiche der drei Bildsensoren 15, 16, 21 aneinander anschließen oder nur in Randbereichen überlappen. Hierdurch kann der gesamte Dynamikbereich des Sensorsystems weiter vergrößert werden.

Gemäß Fig. 4 umfasst die Detektoranordnung 12" gemäß einem dritten Ausführungsbeispiel der Erfindung anstelle der Strahlteiler 14, 20 einen Prismenblock 23, der zwei Teilerflächen 24, 25 enthält, um die jeweiligen Anteile der vom Messobjekt reflektierten Beleuchtungsstrahlung zum ersten, zweiten und dritten Bildsensor 15, 16, 21 weiterzuleiten, die dementsprechend an den verschiedenen Seiten des Prismenblocks 23 angeordnet sind. Im Übrigen entspricht das dritte Ausführungsbeispiel dem zuvor beschriebenen zweiten Ausführungsbeispiel.

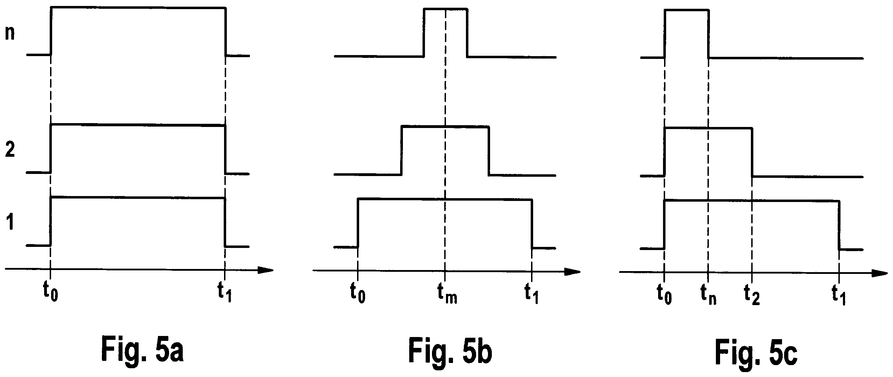

In Fig. 5a bis 5c ist dargestellt, dass eine unterschiedliche Aufteilung der vom Messobjekt reflektierten Beleuchtungsstrahlung auch durch unterschiedliche Belichtungs- bzw. Integrationszeiten der einzelnen Bildsensoren erreicht werden kann. Bei den zuvor beschriebenen Ausführungsbeispielen ist angenommen worden, dass alle Bildsensoren die gleiche Belichtungsdauer haben und die Anfangs- und Endzeitpunkte der Belichtungen bzw. Integrationszeiten der Bildsensoren jeweils dieselben sind (s. Fig. 5a für n Bildsensoren). Bei unterschiedlichen Belichtungszeiten kann die Belichtung der Einzelsensoren symmetrisch um einen in der Mitte der jeweiligen Belichtungszeit liegenden Zeitpunkt tₘ erfolgen (siehe Fig. 5b). Wie in Fig. 5c gezeigt, kann es beispielsweise auch vorgesehen sein, dass die Belichtungen zu einem gemeinsamen Zeitpunkt t₀ beginnen und zu unterschiedlichen Zeitpunkten t₁, t₂, ..., tₙ enden, je nach vorgegebener Belichtungsdauer. Auch hierdurch kann in der Regel erreicht werden, dass auch bei einer Messung während einer Bewegung des optischen Sensorsystems die einzelnen Sensoren reflektierte Strahlung vom gleichen Oberflächenbereich des Messobjekts erhalten und somit eine ausreichend genaue Abstandsmessung möglich ist; hierfür ist es vorteilhaft, wenn die zeitliche Überlappung der einzelnen Belichtungen maximiert wird.

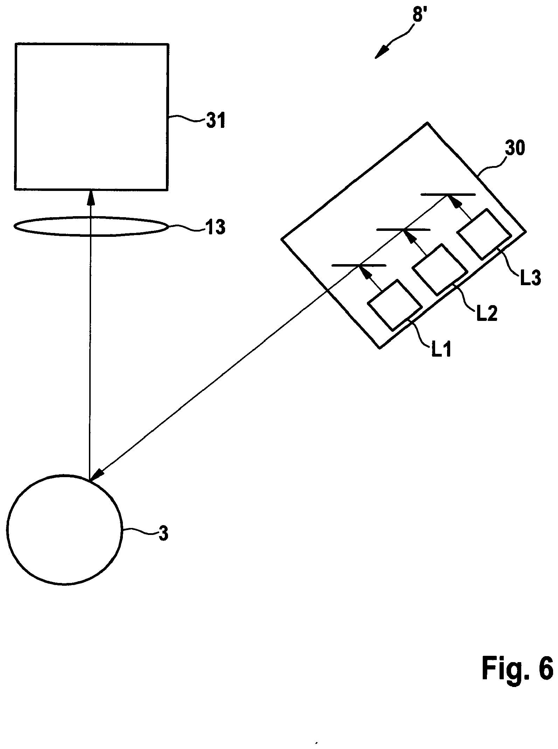

Fig. 6 zeigt schematisch ein optisches Sensorsystem 8' gemäß einem fünften Ausführungsbeispiel der Erfindung. Das Sensorsystem 8' ist wie zu Fig. 2 beschrieben aufgebaut, wobei jedoch die Beleuchtungsanordnung einen Projektor 30 mit drei Lichtquellen L1, L2, L3 und die Detektoranordnung eine Farbkamera 31 aufweist. Die drei Lichtquellen L1, L2, L3 des Projektors 30 erzeugen jeweils Licht in unterschiedlichen Wellenlängenbereichen, welches über die in Fig. 6 angedeuteten Strahlteiler in den Beleuchtungsstrahlengang eingekoppelt und von einer nicht dargestellten Beleuchtungsoptik auf die Oberfläche des Messobjekts (Kugel 3) projiziert wird. Die Farbkamera 31 umfasst drei separate Bildsensoren, die jeweils in entsprechenden Wellenlängenbereichen empfindlich sind und dadurch drei Farbkanäle definieren, oder auch einen einzigen Bildsensor, der nach Art eines Bayer-Filters unterschiedliche Pixelmengen mit jeweils unterschiedlichen Farbfiltern aufweist, die die einzelnen Farbkanäle bilden. Dabei können insbesondere ein roter, ein grüner und ein blauer Farbkanal im jeweils entsprechenden Spektralbereich vorgesehen sein.

Wird nun beispielsweise die Sensitivität des grünen Farbkanals gegenüber dem blauen Farbkanal über die Eigenschaften der oben erwähnten optischen Elemente und/oder die Belichtungszeiten und/oder die vorgegebenen Leistungen der Lichtquellen L1, L2 bzw. L3 um einen Faktor 10 größer eingestellt, und analog die Sensitivität des roten Farbkanals gegenüber dem grünen Farbkanal ebenfalls um einen Faktor 10 vergrößert, so ergibt sich insgesamt ein 100-fach größerer Sensitivitätsbereich.

Wenn als Farbkamera 31 eine 3-CCD- oder 3-CMOS-Kamera verwendet wird, ergibt sich als besonderer Vorteil, dass die Wellenlängenbereiche scharf voneinander abgrenzbar sind, und zudem lassen sich die Belichtungszeiten und Verstärkungen der einzelnen Bildsensoren individuell einstellen. Dadurch lässt sich eine feine Abstimmung der effektiven Sensitivitäten der einzelnen Farbkanäle erreichen.

Bei einer vereinfachten Variante des fünften Ausführungsbeispiels kann auch unter Verwendung nur einer einzigen, schmalbandigen Lichtquelle, etwa einer Laserlichtquelle, ein erhöhter Dynamikbereich des optischen Sensorsystems realisiert werden. In diesem Fall weist der Projektor 30 bei dem Sensorsystem 8' gemäß Fig. 6 nur eine einzige Lichtquelle auf. Dabei kann ausgenutzt werden, dass die Farbkanäle üblicher Bildsensoren bzw. übliche Rot-, Grün- und Blaufilter, die in Farbkameras verwendet werden, Überlappungsbereiche aufweisen. So hat beispielsweise bei einem Farbbildsensor des Typs Sony IMX 265 bei einer Wellenlänge von 450 nm der blaue Farbkanal eine Quanteneffizienz von etwa 48%, der grüne Farbkanal von etwa 5 % und der rote Farbkanal von etwa 1 %. Die Sensitivitäten der drei Farbkanäle verhalten sich somit wie 48 : 5 : 1 bei der genannten Wellenlänge von 450 nm. Wird somit mit dem Projektor 30 nur mit einer einzigen Lichtquelle Beleuchtungslicht mit einer Wellenlänge von 450 nm erzeugt, so wird das vom Messobjekt zurückgeworfene Beleuchtungslicht im blauen Farbkanal mit hoher Sensitivität, im grünen Farbkanal mit mittlerer Sensitivität und im roten Farbkanal mit niedriger Sensitivität detektiert. Somit lässt sich auf diese Weise der Dynamikbereich im Vergleich zu einer monochromen Kamera um etwa den Faktor 48 erhöhen. Andere Sensitivitätsfaktoren lassen sich durch die Variation der Wellenlänge der Lichtquelle des Projektors erreichen.

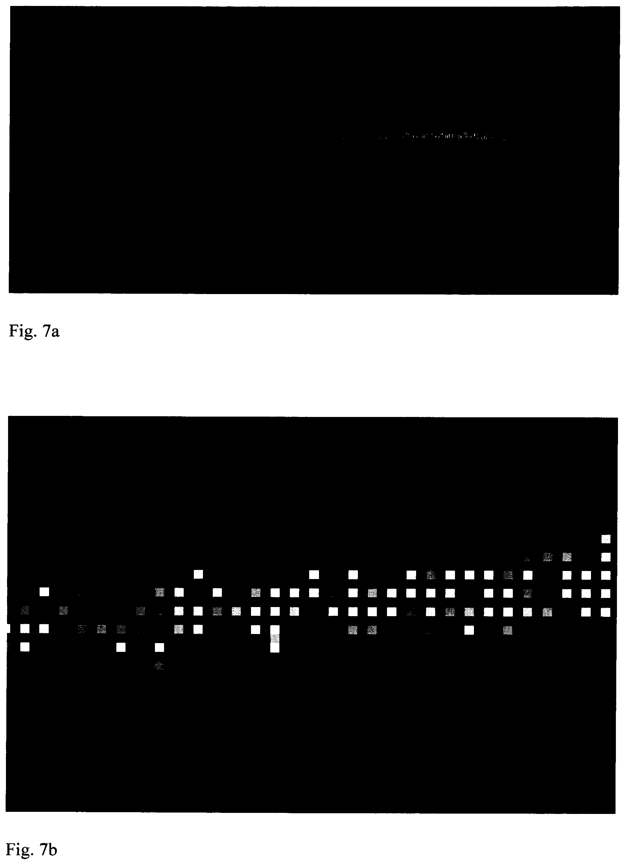

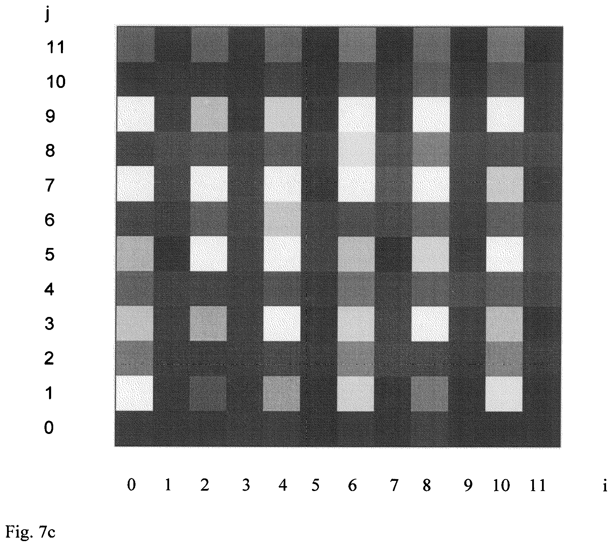

In Fig. 7a bis 7c ist die mit dem Sensorsystem gemäß Fig. 6 bzw. der zuvor genannten vereinfachten Variante aufgenommene Intensitätsverteilung bei einer beispielhaft gezeigten Messung dargestellt. Bei der gezeigten Messung wird nach Art des Lichtschnittverfahrens eine Lichtlinie auf die Oberfläche des Messobjekts projiziert und aus einer Verschiebung des Bilds eines Lichtpunkts der Lichtlinie auf die Entfernung des entsprechenden Punkts der Oberfläche des Messobjekts geschlossen. Wie in Fig. 7a gezeigt, bildet bei der dargestellten Beispielmessung das reflektierte Licht eine gekrümmte Linie, woraus auf eine entsprechende Krümmung der Oberfläche des Messobjekts geschlossen werden kann. In Fig. 7b ist ein vergrößerter Ausschnitt des mittleren Bereichs der Lichtlinie und in Fig. 7c ein weiter vergrößerter Ausschnitt dargestellt.

Bei dem in Fig. 7a bis 7c gezeigten Beispiel weist die Farbkamera einen einzigen Bildsensor auf, wobei den Pixeln des Bildsensors ein Bayer-Filter vorgeschaltet ist, durch das die Pixel den jeweiligen Farbkanälen zugeordnet werden. So repräsentiert etwa in Fig. 7c das Pixel mit der Spaltennummer i = 0 und der Zeilennummer j = 1 den blauen Farbkanal, wobei die Spaltennummern i (in horizontaler Richtung) und die Zeilennummern j (in vertikaler Richtung) jeweils von einem willkürlich gewählten Nullpunkt ausgehend angegeben sind. Ebenso gehören die jeweils um 2 Pixel in horizontaler und vertikaler Richtung versetzten Pixel dem blauen Farbkanal an, also beispielsweise die Pixel (i, j) = (0, 3), (0, 5) und (2, 1). Die Pixel des blauen Farbkanals, d.h. diejenigen Pixel, die aufgrund des vorgeschalteten Bayer-Filters den blauen Spektralbereich empfangen, werden hier auch als "blaue Pixel" bezeichnet. Das Pixel bei (i, j) = (1, 0) sowie die jeweils um 2 Pixel horizontal und vertikal versetzten Pixel, also beispielsweise die Pixel (i, j) = (1, 2), (1, 4) und (3, 0), sind im roten Spektralbereich empfindlich und bilden den roten Farbkanal ("rote Pixel"). Die übrigen Pixel sind im grünen Spektralbereich empfindlich ("grüne Pixel").

Bei dem gezeigten Beispiel, das mit dem Sensorsystem gemäß der erwähnten vereinfachten Variante aufgenommen worden ist, ist die einzige Lichtquelle des Projektors 30 eine blaue Laserlichtquelle mit einer Wellenlänge von 450 nm, so dass sich bei dem genannten Farbbildsensor die Sensitivitäten der blauen, grünen und roten Pixel wie 48 : 5 : 1 verhalten und die blauen, grünen und roten Pixel entsprechend unterschiedliche Signalstärken aufweisen. Alternativ können bei dem in Fig. 6 dargestellten Sensorsystem 8' das Bayer-Filter, der Bildsensor, die Lichtquellen L1, L2 und L3 und/oder die Strahlteiler des Projektors 30 derart aufeinander abgestimmt und ausgestaltet sein, dass bei einer spektral gleichmäßigen Reflexion das Signal der blauen Pixel eine höhere Signalstärke als das der grünen Pixel und dieses wiederum eine höhere Signalstärke als das der roten Pixel hat. In Fig. 7a bis 7c ist die jeweilige Signalstärke der Pixel im Verhältnis zum Dynamikbereich durch die Grautönung dargestellt, wobei weiße Pixel übersteuert sind, schwarze Pixel untersteuert sind und grau dargestellte Pixel innerhalb des Dynamikbereichs liegen.

Wie in Fig. 7a zu erkennen ist, ist die Signalstärke entlang der Lichtlinie unterschiedlich, wobei im linken Bereich der Lichtlinie das Signal der blauen Pixel innerhalb des jeweiligen Dynamikbereichs liegt, so dass dieses zur Abstandsermittlung verwendet werden kann. Im Bereich rechts der Mitte sind aufgrund gerichteter Reflexionen an der Objektoberfläche die blauen Pixel zum Teil übersteuert.

Ein Bereich der Lichtlinie rechts der Mitte ist in Fig. 7b vergrößert und in Fig. 7c ein weiterer Bereich nochmals vergrößert gezeigt. Im gezeigten Beispiel verläuft die Ebene, die durch die Beleuchtungsrichtung der Beleuchtungsanordnung und die Blickrichtung der Detektoranordnung gebildet wird, näherungsweise vertikal, so dass zur Abstandsermittlung eines Punkts der Objektoberfläche die Pixel jeweils einer Spalte oder auch mehrerer nebeneinanderliegender Spalten dienen können, wobei eine Verschiebung des Schwerpunkts der Intensitätsverteilung in vertikaler Richtung ermittelt wird. Dabei werden Teilmengen von Pixeln herangezogen, die durch die Pixel jeweils eines Farbkanals in einer oder mehreren nebeneinanderliegenden Spalten gebildet werden. Dabei können beispielsweise die blauen Pixel einer Spalte als erster Sensor und die Mehrzahl der Signale bzw. Pixelwerte der blauen Pixel der Spalte als erstes Sensorsignal angesehen werden; entsprechend bilden die grünen Pixel der Spalte einen zweiten Sensor mit einem zweiten Sensorsignal. Ferner kann es vorgesehen sein, dass in jeder Spalte nur Pixel in einem ca. 10 bis 20 Pixel breiten Bereich um die Mitte der Lichtlinie berücksichtigt werden.

Werden beispielsweise bei der in Fig. 7c gezeigten Intensitätsverteilung die Pixel der Spalte i = 4 zur Abstandsermittlung verwendet, so weisen in dieser Spalte die blauen Pixel insgesamt und auch im Vergleich zu den jeweiligen benachbarten Pixeln ein höheres Signal als die grünen Pixel auf. Insbesondere sind die blauen Pixel in den Zeilen j = 5 und j = 7 übersteuert. Das erste Sensorsignal, das durch die Mehrzahl der Signale der blauen Pixel der Spalte gebildet wird, liegt daher außerhalb des Dynamikbereichs und wird somit nicht zur Schwerpunktsermittlung und nicht zur Ermittlung des Abstands des betreffenden Punkts der Objektoberfläche verwendet. Andererseits liegt die Signalstärke bei den grünen Pixeln innerhalb des Dynamikbereichs, so dass aus den Pixelwerten der grünen Pixel der Schwerpunkt der Lichtverteilung ermittelt und somit ein Abstandswert errechnet werden kann. Entsprechendes gilt etwa für die Spalte i = 6, in der die blauen Pixel in den Zeilen j = 7 und j = 9 übersteuert sind, während das Signal der grünen Pixel innerhalb des Dynamikbereichs liegt. Dabei können Pixel, die untersteuert sind, berücksichtigt oder auch nicht berücksichtigt werden, ohne dass dies den ermittelten Abstandswert wesentlich verfälscht.

Der Übersichtlichkeit halber sind nicht in allen Figuren alle Bezugszeichen dargestellt. Zu einer Figur nicht erläuterte Bezugszeichen haben die gleiche Bedeutung wie in den übrigen Figuren.

### Bezugszeichenliste

- 1: Koordinatenmessgerät
- 2: Tisch
- 3: Kugel
- 4, 4': Säule
- 5: Traverse
- 6: Schlitten
- 7: Pinole
- 8,8': Sensorsystem
- 10: Beleuchtungsanordnung
- 11: Projektor
- 12, 12', 12": Detektoranordnung
- 13: Objektiv
- 14: Strahlteiler
- 15: Bildsensor
- 16: Bildsensor
- 17: Filter
- 18: Filter
- 20: Strahlteiler
- 21: Bildsensor
- 22: Filter
- 23: Prismenblock
- 24: Teilerfläche
- 25: Teilerfläche
- 30: Projektor
- 31: Farbkamera

## Patentansprüche

1. Optisches Sensorsystem für ein Koordinatenmessgerät (1), umfassend eine Beleuchtungsanordnung (10) zum Projizieren einer Beleuchtungsstrahlung auf einen Oberflächenbereich eines Messobjekts und eine Detektoranordnung (12, 12', 12") mit einer Detektoroptik und einer Sensoranordnung zum Erzeugen eines Sensorsignals aufgrund eines Teils der vom Oberflächenbereich des Messobjekts reflektierten Beleuchtungsstrahlung, wobei die Beleuchtungsanordnung (10) und die Detektoranordnung (12, 12', 12") zum Erfassen eines Abstands des Oberflächenbereichs des Messobjekts vom Sensorsystem (8, 8') zusammenwirken, **dadurch gekennzeichnet, dass** die Sensoranordnung mindestens einen ersten und einen zweiten Sensor umfasst und die Detektoroptik zum Weiterleiten eines ersten Anteils der reflektierten Beleuchtungsstrahlung auf den ersten Sensor und eines zweiten Anteils der reflektierten Beleuchtungsstrahlung auf den zweiten Sensor ausgebildet ist, derart, dass ein Sensorsignal des ersten Sensors eine unterschiedliche Signalstärke wie ein entsprechendes Sensorsignal des zweiten Sensors hat.

2. Optisches Sensorsystem nach Anspruch 1, **dadurch gekennzeichnet, dass** der erste und der zweite Sensor jeweils als Bildsensor (15, 16, 21) oder als unterschiedliche Teilmengen der Pixel eines Bildsensors ausgebildet sind.

3. Optisches Sensorsystem nach Anspruch 1 oder 2, **dadurch gekennzeichnet, dass** die Detektoroptik einen Strahlteiler (14, 20) zum Weiterleiten des ersten Anteils in einen ersten Strahlengang zum ersten Sensor und zum Weiterleiten des zweiten Anteils in einen zweiten Strahlengang zum zweiten Sensor umfasst.

4. Optisches Sensorsystem nach Anspruch 3, **dadurch gekennzeichnet, dass** der Strahlteiler (14, 20) ein Neutralteiler mit asymmetrischem Teilungsverhältnis ist und/oder dass nur im ersten oder nur im zweiten Strahlengang ein Graufilter angeordnet ist oder im ersten und im zweiten Strahlengang jeweils ein Graufilter mit unterschiedlichen Transmissionskoeffizienten angeordnet ist und/oder dass nur im ersten oder nur im zweiten Strahlengang eine Blende angeordnet ist oder im ersten und im zweiten Strahlengang jeweils eine Blende mit unterschiedlichen Öffnungen angeordnet ist.

5. Optisches Sensorsystem nach Anspruch 3 oder 4, **dadurch gekennzeichnet, dass** der Strahlteiler (14, 20) ein dichroitischer Strahlteiler ist und/oder dass nur im ersten oder nur im zweiten Strahlengang ein Farbfilter angeordnet ist oder im ersten und im zweiten Strahlengang jeweils ein Farbfilter angeordnet ist, wobei die Farbfilter zur Transmission unterschiedlicher Wellenlängenbereiche ausgebildet sind.

6. Optisches Sensorsystem nach einem der vorhergehenden Ansprüche, **dadurch gekennzeichnet, dass** die Detektoroptik und/oder die Sensoranordnung zur Aufnahme des Sensorsignals des ersten und des zweiten Sensors mit unterschiedlichen, einander überlappenden Belichtungszeiten ausgebildet sind.

7. Optisches Sensorsystem nach einem der vorhergehenden Ansprüche, **dadurch gekennzeichnet, dass** der erste und der zweite Sensor unterschiedliche Sensitivitäten aufweisen.

8. Optisches Sensorsystem nach einem der vorhergehenden Ansprüche, **dadurch gekennzeichnet, dass** sich die effektiven Sensitivitätsbereiche des ersten und des zweiten Sensors aneinander anschließen oder in einem Randbereich überlappen.

9. Optisches Sensorsystem nach einem der vorhergehenden Ansprüche, **dadurch gekennzeichnet, dass** die Sensoranordnung mindestens einen dritten Sensor umfasst und die Detektoroptik zur Weiterleitung eines dritten Anteils der reflektierten Beleuchtungsstrahlung auf den dritten Sensor ausgebildet ist.

10. Optisches Sensorsystem nach einem der vorhergehenden Ansprüche oder nach dem Oberbegriff von Anspruch 1, **dadurch gekennzeichnet, dass** die Sensoranordnung eine Farbkamera zum Erzeugen mindestens eines ersten Sensorsignals, das einem ersten Wellenlängenbereich entspricht, und eines zweiten Sensorsignals, das einem zweiten Wellenlängenbereich entspricht, umfasst, wobei die Beleuchtungsanordnung (10) zum Projizieren einer derartigen Beleuchtungsstrahlung in dem ersten und dem zweiten Wellenlängenbereich ausgebildet ist, dass das erste Sensorsignal eine unterschiedliche Signalstärke wie das zweite Sensorsignal hat.

11. Optisches Sensorsystem nach einem der vorhergehenden Ansprüche, **dadurch gekennzeichnet, dass** das optische Sensorsystem eine Prozessoreinrichtung umfasst, die derart zur Ermittlung des Abstands eingerichtet ist, dass in dem Fall, dass das Sensorsignal des ersten Sensors innerhalb eines Dynamikbereichs des ersten Sensors und das Sensorsignal des zweiten Sensors außerhalb eines Dynamikbereichs des zweiten Sensors liegt, das Sensorsignal des ersten Sensors zur Abstandsermittlung verwendet und das Sensorsignal des zweiten Sensors nicht zur Abstandsermittlung verwendet wird, oder umgekehrt.

12. Verfahren zum Erfassen eines Messpunkts auf einer Oberfläche eines Messobjekts mit einem Koordinatenmessgerät (1) mit einem optischen Sensorsystem (8, 8'), wobei eine Beleuchtungsstrahlung auf einen Oberflächenbereich des Messobjekts projiziert wird, ein erster Anteil der vom Oberflächenbereich des Messobjekts reflektierten Beleuchtungsstrahlung zu einem ersten Sensor des Sensorsystems (8, 8') weitergeleitet wird und gleichzeitig ein zweiter Anteil der vom Oberflächenbereich des Messobjekts reflektierten Beleuchtungsstrahlung zu einem zweiten Sensor des Sensorsystems (8, 8') weitergeleitet wird, wobei ein aufgrund des ersten Anteils erzeugtes Sensorsignal des ersten Sensors eine unterschiedliche Signalstärke wie ein aufgrund des zweiten Anteils erzeugtes Sensorsignal des zweiten Sensors hat, und wobei aus dem Sensorsignal des ersten Sensors und/oder dem Sensorsignal des zweiten Sensors ein Abstand eines Messpunkts innerhalb des Oberflächenbereichs des Messobjekts vom Sensorsystem (8, 8') ermittelt wird.

13. Verfahren nach Anspruch 12, **dadurch gekennzeichnet, dass** ermittelt wird, ob das Sensorsignal des ersten Sensors innerhalb eines Dynamikbereichs des ersten Sensors liegt und ob das Sensorsignal des zweiten Sensors innerhalb eines Dynamikbereichs des zweiten Sensors liegt und dass in dem Fall, dass das Sensorsignal des ersten Sensors innerhalb des Dynamikbereichs des ersten Sensors und das Sensorsignal des zweiten Sensors außerhalb des Dynamikbereichs des zweiten Sensors liegt, das Sensorsignal des ersten Sensors zur Abstandsermittlung verwendet und das Sensorsignal des zweiten Sensors nicht zur Abstandsermittlung verwendet wird, oder umgekehrt.

14. Verfahren nach Anspruch 12 oder 13, **dadurch gekennzeichnet, dass** das Sensorsignal des ersten und das Sensorsignal des zweiten Sensors während einer Bewegung des Sensorsystems (8, 8') relativ zum Oberflächenbereich des Messobjekts erzeugt werden.

15. Koordinatenmessgerät mit einem Tastkopf, **dadurch gekennzeichnet, dass** der Tastkopf als optisches Sensorsystem (8, 8') gemäß einem der Ansprüche 1 bis 13 ausgebildet ist oder ein solches umfasst.
